# EUROPEAN PATENT APPLICATION

(11) **EP 4 506 581 A1**
(43) Date of publication of application: **12.02.2025**
(21) Application number: 23784306.5
(22) Date of filing: 06.04.2023
(51) Int. Cl.: F16C 33/58, A63C 17/20, A63C 17/22, A63C 17/02

(54) **ROLLING BEARING AND APPLICATION THEREOF**

(30) Priority: 07.04.2022 CN 202220796473 U; 26.09.2022 CN 202211173219; 10.11.2022 CN 202211407494
(71) Applicant: Zhuangda Technology And Industry (Hangzhou) Co., Ltd, Hangzhou, Zhejiang 311231 (CN)
(72) Inventor: ZHOU, Zhizhuang, Hong Kong (CN)
(74) Representative: Cabinet Chaillot
(86) International application number: PCT/CN2023/086457
(87) International publication number: WO 2023/193743

(57) **Abstract**

A rolling bearing (41) comprising an inner ring (401), an outer ring (402), and balls distributed between the inner ring and the outer ring. The rolling bearing (41) only extends outwardly by a protruding ring (403) from the inner ring on a single side, the protruding ring (403) and the inner ring (401) are integrally formed, and an end portion of the protruding ring (403) forms an abutting end for performing abutting. Also provided is the application of the rolling bearing (41) in a roller skate, wherein a pair of bearing protruding rings (403) inwardly abut against each other and are mounted in a roller assembly hole (51), thereby omitting a traditional movable spacer sleeve, and overcoming the defect that roller skate rollers (4) cannot be fastened during assembly. Moreover, the rolling bearing (41) also operates within the operating precision requirement range thereof, the rollers (4) rotate flexibly, and the safety is also guaranteed.

## Description

### Technical Field

The present invention relates to the field of sports equipment technology, specifically to a rolling bearing and its application.

### Background Technology

Currently, there are drawbacks in the installation of pulleys on roller skates, where the pulleys cannot be securely fastened. This is due to the difficulty in controlling relative tolerance and the self-processing tolerance of the outer ring fixation spacing between the pulley mounting hole's outer ring fixation grooves used for fixing the bearings, and the inner spacing between a pair of bearing inner rings after installation. Specifically, pulleys of the same model have a set spacing that keeps the outer rings of the bearings installed in pairs at the center hole of the pulley apart. This set spacing can also be called the fixed spacing of the outer rings. Usually, almost all bearings are of equal height design, that is, both sides of the inner and outer rings of the bearing are almost aligned. When the bearings are installed in pairs at the center hole of the pulley, a spacing sleeve needs to be installed between the inner rings of the two bearings, so that when the nail is passed through and tightened, there are support points on both sides of the inner ring, so that the inner ring and the outer ring can maintain a relatively fixed position in the axial direction. However, the increase in components will lead to an increase in the factors and number of tolerances. For example, there are machining or processing tolerances in the spacing sleeve, the bearing itself also has machining or processing tolerances, etc. It is easier to understand that the accumulated tolerance will increase, resulting in less smooth wheel rotation.

As a result, users must loosen the pulley fastening as a means to leave gaps to ensure the free movement of the pulley wheels. The consequence is that, under the load and motion forces when wearing roller skates, the remaining gap causes the pulley to exhibit a certain degree of sway. Overtime, this leads to the widening of the clearances between the bearing steel balls and their corresponding grooves, resulting in accelerated damages during bearing operation. The grease is lost due to overheating, noise increases, swaying intensifies, and eventually, safety accidents such as the pulley rubbing against the frame or the wheel falling off may occur.

After research, it was found that almost all roller skate wheels on the market cannot be tightened. Tightening them immediately leads to the aforementioned issues. In simple terms, the wheels do not rotate freely when turned by hand, have slow rotation, and a short rotation time.

### Summary of the Invention

To address the problems in the prior art, the present invention changes the prior art design of a rolling bearing with the inner and outer rings having the same length, and provides a rolling bearing with a design modification where the length of the inner and outer rings is no longer the same. Instead, a protruding ring is extended from one side of the inner ring, serving as a stopper. This design is implemented during the processing of the rolling bearing and significantly reduces the probability of tolerances compared to common components such as spacer sleeves.

Furthermore, the present invention provides an application of the rolling bearing in roller skates. In this application, a pair of rolling bearing protruding rings are arranged inwardly and abut against each other, installed inside the wheel core, eliminating the need for traditional spacer sleeves. Only the tolerance of the rolling bearing needs to be controlled, allowing the pulley to be in a tightened state during installation. The rolling bearing operates within its own precision requirements, resulting in flexible pulley rotation and enhanced safety.

The present invention adopts the following technical solutions:
A rolling bearing comprising an inner ring, an outer ring, and rolling balls or beads distributed between the inner ring and outer ring. The rolling bearing only has an outwardly protruding ring extending from one side of the inner ring, and the protruding ring is integrally formed with the inner ring, with the protruding ring's end forming a stopper for abutment or contact.

An application method of the rolling bearing is to use the rolling bearing as described above in roller skates. The roller skate includes the aforementioned rolling bearing and:
A wheel frame configured to support the main body of the roller skate. The wheel frame includes a supporting portion for connecting the shoe body and two vertical plates extending downward from two ends of the supporting portion, respectively. The two vertical plates and the supporting portion form a space containing the pulleys enclosed therebetween, with through holes on the vertical plates for nails to pass through.

Pulleys, including wheel cores with assembly holes for installing the rolling bearings. The pulleys are rotationally connected to the vertical plates using passing-through nails.

In the middle of an assembly hole, there is a stop ring protruding towards the center of the circle of the assembly hole. The rolling bearings are installed in pairs in the assembly hole, and the outer rings of the two rolling bearings are separated by the stop ring. The protruding rings of the two rolling bearings inside the assembly hole abut against each other and make contact.

The vertical plate has a convex abutment portion for engaging with the inner ring of the rolling pulley at the through-hole position on the inner side of the vertical plate, the convex abutment portion protruding from the inner side of the vertical plate. When the pulley is located between the two vertical plates, the convex abutment portion abuts against the inner ring of the rolling bearing.

Furthermore, the outer ring peripheral surface of the rolling bearing has an interference fit with the assembly hole. The purpose of this design is to keep the outer ring of the rolling bearing and the assembly hole relatively stationary through friction, and there is no relative sliding between the two. When the pulley is rotated under force, the kinetic energy loss obtained by the rolling bearing is smaller, which can make the pulley rotate at a higher rate.

Moreover, the thickness of the stop ring forms a fixed spacing of the outer ring, and the length of the single-sided extension of the inner ring of the rolling bearing, that is, the length of the protruding ring, is 1/2 of the fixed spacing of the outer ring. This setting allows two rolling bearing protruding rings to collide with each other in their length direction, which replaces the movable spacing sleeve in the middle of the wheel core assembly hole. As long as this tolerance point is ensured where the fixed spacing size of the outer ring must be less than the sum of the lengthened values of the two colliding protruding rings, other factors can be ignored.

The biggest issue in the application of rolling bearings is this -- how to make the rolling bearing keep the steel ball and the groove it fits in the center line of the rotation trajectory during application, in other words, how to make the clearance between the bearing groove and the ball as balanced as possible. Although in the past, two bearings were used to work in parallel to ensure the parallelism of the inner and outer rings and reduce the relative displacement of the two center lines, in actual applications, a shaft must be used to connect the two bearings inside. When the rings are connected in series for axial fastening, the remaining machining tolerance of the misaligned components in the series circuit (such as inner ring spacing bushings; outer ring centering spacing; steps; or gaskets, etc.) will be immediately determined. The colinearity of the two center lines is destroyed, and the steel balls squeeze the grooves left and right, causing the rotation of the product to be blocked.

Therefore, furthermore, the thickness of the stop ring forms the fixed spacing of the outer ring, the sum of the lengths of the two protruding rings is greater than the fixed spacing of the outer ring, and the sum of the lengths of the two protruding rings is 0.1-0.3 mm greater than the fixed spacing of the outer ring. This is a better solution. In actual operation, As long as this tolerance point is ensured where the size of the fixed spacing of the outer ring must be less than the sum of the lengthened values of the two protruding rings, the rest can be ignored. This kind of tolerance control is very important for rolling bearings. For precision parts processing, it is very easy to control; in other words, when the two protruding ring pairs abut against each other, the tighter they are tightened, the tighter the fit and the more flexible the wheel rotation.

Moreover, the above technical solution advocates removing all the parts with higher error rates used for the rotation of the rolling bearing, and having the bearing manufacturer produce standard product specifications of the inner ring with higher error rates in one step. In practical application design, it is only considered that the fixed distance between the outer rings of the two bearings must be a node of the negative tolerance of the sum of the heights of the protruding rings. The accuracy of the negative tolerance is determined by the allowable shaft string momentum of the product. In this way, the rolling bearing is sure to be at its best when applied.

Furthermore, among the two rolling bearings, the length of the outer ring protruding from the opening of the assembly hole is 0.5-1.2mm, and the length of the protruding portion protruding from the inner side of the vertical plate is 2.2-2.8mm. In this case, a part of the outer ring protrudes outward relative to the opening of the assembly hole. However, since the length of the protrusion is longer than this part by at least 0.8mm more, it can ensure that the outer ring does not touch the inner side of the vertical plate to maintain a safe distance.

When different manufacturers design the wheel frame, they mainly consider the indicators such as the support strength, torsion resistance and weight of the wheel frame. These indicators are particularly important in the field of racing roller skating. The reason is that when roller skating is in progress, the left and right feet will generate larger thrust respectively, so the wheel frame needs to be designed to be stronger. Otherwise, the different timing of the foot will cause the wheel frame to produce a certain twist, which will damage the propulsion force; or in other words, when roller skating users accelerate, they need to apply force to pedal the roller skates to obtain reaction force to help accelerate. Generally, the wheel frame is composed of plates with a certain thickness. The reaction force generated will cause the thinner plates to deform in different sizes, which makes a part of the reaction force used for acceleration lost, thereby weakening the overall acceleration effect; and the excessive weight of the wheel frame will consume more physical energy of the athlete. In order to improve the structural strength and torsion resistance of the wheel frame, some wheel frames for roller skates on the market are now made of a double-layer structure to strengthen the two vertical plate structures of the wheel frame and improve its torsion resistance; and some manufacturers add reinforcement ribs on the wheel frame. The reinforcement ribs are set inside the wheel frame, which will widen the wheel frame in disguise, because it needs to avoid interference with the wheel rotation, thereby increasing the weight of the wheel frame. However, no matter what kind of reinforced structure is currently on the market, it will cause an increase in the weight of the wheel frame or an unnecessary increase in cost, which also increases the production cost and makes it more laborious to use.

Therefore, further, the vertical plate includes a reinforcing tube arranged along the length direction of the vertical plate and an anti-torsion part connected to the supporting part; the reinforcing tube is configured to prevent the vertical plate from deforming; and the anti-torsion part is configured to prevent the vertical plate from connecting with the supporting part. deformation occurs between them.

The structural strength of the vertical board is strengthened by reinforcing tubes provided on the vertical board. On the one hand, it improves the support strength of the vertical board. On the other hand, it improves the torsion resistance of the vertical board, that is, when speed skaters pedal sideways on roller skates, the vertical board will not be deformed due to the reaction force on the wheels, so there will be no unnecessary loss of the human body's kicking force and the reaction force for acceleration, thereby improving the athlete's acceleration ability. Similarly, the resistance to the torsion part is located between the vertical plate and the supporting part. The anti-torsion part strengthens the overall structural strength of the wheel frame and prevents speed skaters from deforming the vertical plate and the supporting part when they pedal sideways on roller skates. The force and the reaction force used for acceleration will not be absorbed by the wheel frame, and the acceleration capability is further improved.

Preferably, the anti-torsion part includes two support plates branched upward, both of which are fixedly connected to the support part; the two support plates are respectively an outer support plate connected to the end of the support part and an inner support plate connected to the bottom of the support part. The outer support plate is inclined outward, the inner support plate is inclined inward. The outer support plate, the inner support plate and the supporting part jointly form a triangular tubular body. The triangular tubular structure formed by two support plates and a supporting part is more stable, ensuring the structural strength and torsion resistance of the wheel frame. In other words, the inner supporting plate is equivalent to a reinforcing rib, which can maintain the connection between the outer supporting plate and the supporting part. When the outer support plate is torsioned and has a tendency to deform relative to the supporting part, the inner support plate can resist this tendency and prevent further deformation and loss of power for acceleration.

Preferably, the reinforcing tube has a substantially triangular cross-section. The triangular reinforced tube structure is stable and ensures the structural strength and torsion resistance of the vertical board.

Preferably, the reinforcing tube includes an inner plate and an outer plate with an included angle. The outer plate is located outside the inner plate and is fixedly connected to the inner plate; the outer plate is provided with a weight-reducing opening. The outer plate has an included angle, and the two sides of the outer plate are connected to the upper end and lower end of the inner plate respectively. When the athlete skates sideways, the lower end of the vertical plate on the front side has a tendency to twist outward. At this time, the outer plate can resist this twisting trend and prevents the vertical plate from further deforming and losing power for acceleration; the weight-saving openings on the outer plate help reduce the overall weight of the wheel frame.

Preferably, the inner panel has an included angle and is bent outward. When an athlete pedals sideways on roller skates, the lower end of the rear upright has a tendency to twist inward, and the outward bending of the inner plate can resist this twisting trend and prevent the vertical plates from further deforming and losing the power for acceleration.

Preferably, the angle range of the inner panel is between 150° and 160°.

Preferably, the vertical plate further includes a plate-shaped mounting part configured to fix a pin inserted in the pulley, and the protruding part is provided on the mounting part; the wall thickness of the anti-torsion part and the reinforcing tube is half of the thickness of the mounting part. The anti-torsion part and the reinforced tube are formed by the material of the wheel frame itself. The wall thickness of the anti-torsion part and the reinforced tube is obtained from the installation part. The thickness of the plate-shaped body is replaced by the tubular body, so there is no need to form a separate reinforcement structure, which helps reduce wheel frame's weight.

Preferably, in the length direction of the vertical plate, the front and rear ends of the vertical plate exceed the supporting portion, and the front and rear ends of the vertical plate are cut from bottom to top toward the center. The amount of material used in the vertical plates is reduced, reducing costs while reducing the weight of the wheel frame, which helps athletes start and accelerate.

Preferably, the supporting part and the vertical plate are integrally formed.

The design starting point, concept and beneficial effects of the present invention adopting the above technical solution are:
1. Since the inner ring of the rolling bearing has a protruding ring extending outward on one side, during assembly, the protruding rings of the two rolling bearings in the assembly hole are all inward and against each other. When assembling such a rolling bearing, a pair of rolling bearing protruding rings replace the traditional movable spacing sleeve in the middle of the wheel core assembly hole changes the fixed spacing of the outer ring in the pulley assembly hole and the relative tolerance of the inner ring spacing between the inner rings of a pair of rolling bearings after installation into an outer ring that is easier to control. The tolerance between the fixed distance and the sum of the lengths of a pair of protruding rings. The more the pulleys are tightened, the more the inner rings of a pair of rolling bearings can be kept in a straight line without affecting the rotation of the outer rings. The rolling bearings can be kept in the normal position during operation. The balls also always maintain a normal relative relationship with the grooves, which solves the problem that the pulleys of current roller shoes tend to rotate inflexibly once they are tightened.
2. Among the two rolling bearings, the length of the outer ring protruding from the opening of the assembly hole is 0.5-1.2mm, and the length of the protruding portion protruding from the inner side of the vertical plate is 2.2-2.8mm. In this case, a part of the outer ring protrudes outward relative to the opening of the assembly hole. However, since the length of the protrusion is longer than this part, at least 0.8mm more, it can ensure that the outer ring does not touch the inside of the vertical plate. sides to ensure a safe distance. The inner ring and outer ring on the other side of the rolling bearing are flush or level and even with each other, so that the outside of the assembled rolling bearing remains consistent with the outside of the traditional rolling bearing assembly. It can be used with common wheel frame on the market, without the need for a professional wheel frame.
3. The wheel frame is within the height range of conventional U-shaped profiles and is designed as a four-tube profile based on the same weight principle. After the wheel frame is made into a wheel frame, the torsion resistance and deformation resistance of the profile are greatly increased, by about 30%. The structural strength of the vertical board is strengthened by reinforcing tubes provided on the vertical board. On the one hand, it improves the support strength of the vertical board. On the other hand, it improves the torsion resistance of the vertical board, that is, when speed skaters pedal sideways on roller skates. , the vertical board will not be deformed due to the reaction force on the wheels, so there will be no unnecessary loss of the human body's kicking force and the reaction force for acceleration, thereby improving the athlete's acceleration ability; similarly, the resistance to The torsion part is located between the vertical plate and the supporting part. The anti-torsion part strengthens the overall structural strength of the wheel frame and prevents speed skaters from deforming the vertical plate and the supporting part when they pedal sideways on roller skates. The force and the reaction force used for acceleration will not be absorbed by the wheel frame, and the acceleration capability is further improved.
4. The inner support plate is equivalent to a reinforcing rib, which can maintain the stability of the outer support plate and the supporting part. When the outer supporting plate is torsioned and tends to deform relative to the supporting part, the inner supporting plate can resist this trend and prevent further deformation and loss of power for acceleration.
5. The outer plate has an included angle, and the two sides of the outer plate are connected to the upper end and lower end of the inner plate respectively. When an athlete skates sideways on roller skates, the lower end of the front vertical plate has a tendency to twist outward. At this time, the outer plate can resist the twisting trend and prevent the vertical board from further deforming and losing the power for acceleration. When an athlete pedals sideways on roller skates, the lower end of the rear vertical board has a tendency to twist inward, while the inner plate bends outward. The posture can resist the tendency of twisting and prevent the vertical plate from further deforming and losing the power for acceleration.
6. The triangular tubular structure formed by the two support plates and the supporting part and the triangular reinforced tube structure are very stable to provide sufficient support strength and torsion resistance.
7. The anti-torsion part and the reinforcing tube are formed by the material of the wheel frame itself. The wall thickness of the anti-torsion part and the reinforcing tube is obtained from the installation part. The thickness of the plate body is replaced by the tubular body, so there is no need to form and strengthen it separately. The structure helps to reduce the weight of the wheel frame; similarly, the weight-saving openings on the outer plate, the front and rear cuts of the vertical plate, and the weight-reducing holes on the vertical plate help to further reduce the overall weight of the wheel frame, helping athletes start and accelerate.

### Brief Description of The Drawings:

Figure 1 is a schematic three-dimensional structural diagram of a pulley in an embodiment of the present invention;
Figure 2 is a schematic three-dimensional structural diagram of the assembly of the wheel core and the bearing in the embodiment of the present invention;
Figure 3 is a cross-sectional view of the wheel core before assembly in the embodiment of the present invention.
Figure 4 is a cross-sectional view of the wheel core and the bearing after assembly in the embodiment of the present invention;
Figure 5 is a cross-sectional view of the assembly of the wheel core rotating structure and the wheel frame in the embodiment of the present invention.
Figure 6 is a schematic three-dimensional structural diagram of an existing U-shaped wheel frame on the market;
Figure 7 is a schematic three-dimensional structural diagram of a U-shaped wheel frame equipped with a reinforcing plate;
Figure 8 is a schematic three-dimensional structural diagram of the wheel frame after the pulley is installed in the embodiment;
Figure 9 is a front view of the wheel frame after the pulley is installed in the embodiment;
Figure 10 is a schematic diagram of the three-dimensional structure of the wheel frame in the embodiment;
Figure 11 is a schematic diagram 2 of the three-dimensional structure of the wheel frame in the embodiment;
Figure 12 is a front view of the wheel frame in the embodiment;
Figure 13 is a schematic diagram of the vertical plate on the front side of the wheel frame resisting torsion in the embodiment;

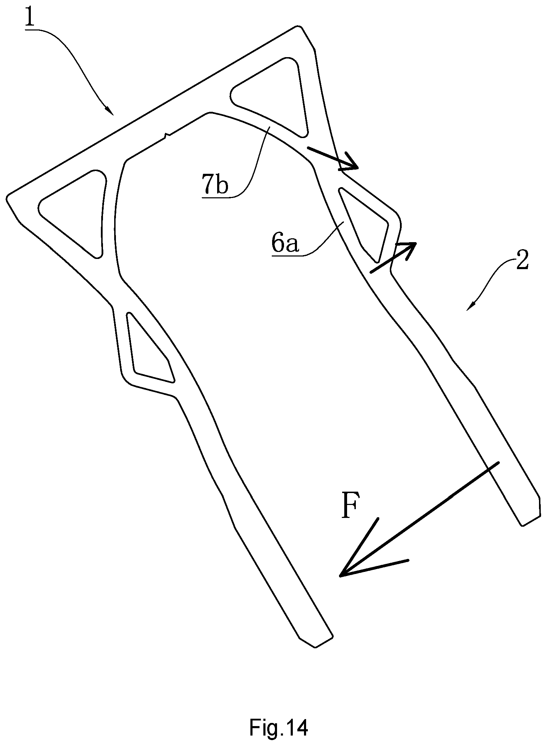

Figure 14 is a schematic diagram of the vertical plate on the rear side of the wheel frame resisting torsion in the embodiment.

The reference numbers are: pulley 4; wheel core 21; PU outer ring 31; rolling bearing 41; inner ring 401; outer ring 402; protruding ring 403; assembly hole 51; outer ring fixing groove 501; stop ring 502; wheel frame61; supporting part 71; vertical plate 81; nail 91; protruding part 101; outer ring fixed distance L; protruding ring length S; supporting part 1; front supporting part 1a; rear supporting part 1b; vertical plate 2; reinforcement plate 3; installation part 5; reinforcement tube 6; inner plate 6a; outer plate 6b; anti-torsion part 7; outer support plate 7a; inner support plate 7b; installation hole 8; weight reduction opening 9; weight reduction hole 10.

### Detailed Description of The Invention

The technical solutions of the embodiments of the present invention will be explained and described below with reference to the accompanying drawings of the present invention. However, the following embodiments are only preferred embodiments of the present invention and are not exhaustive. Based on the examples in the implementation mode, other embodiments obtained by those skilled in the art without any creative work shall fall within the protection scope of the present invention.

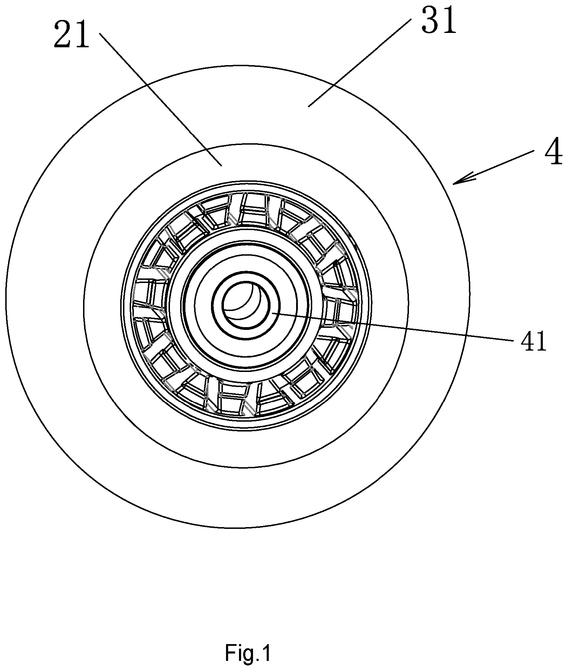

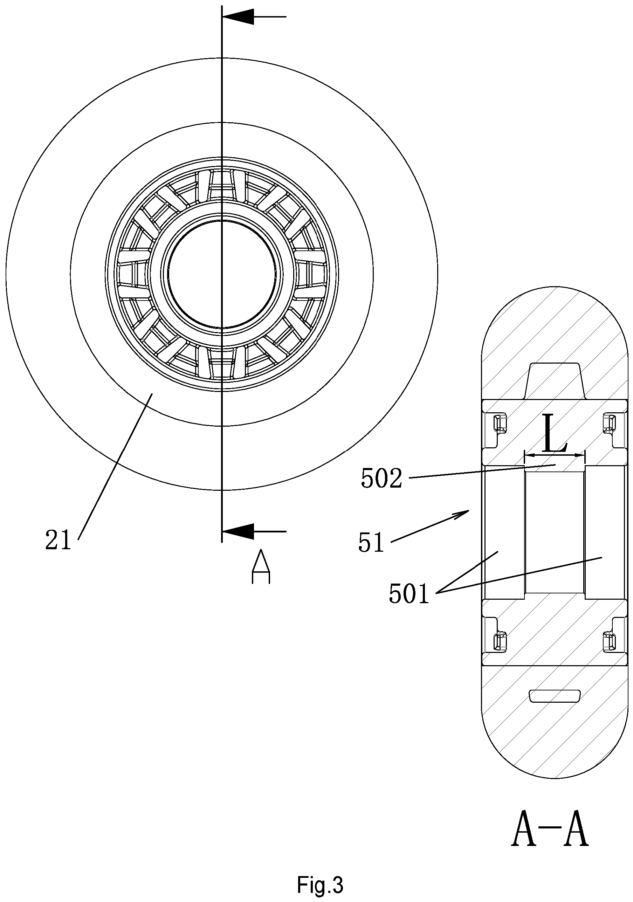

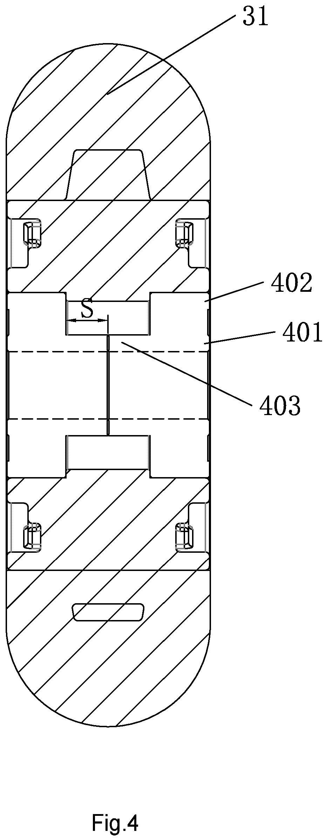

The specific implementation of the present invention is as follows:
As shown in Figures 1-5, the present invention first provides a rolling bearing 41, which includes an inner ring 401, an outer ring 402 and balls or beads distributed between them. The innovative point is that the rolling bearing 41 extends a protruding ring 403 outward from the inner ring 401 on one side. The protruding ring 403 is integrally formed with the inner ring during the bearing processing process. The purpose of the design of the protruding ring 403 is to play a contact role. Since the bearing itself has the attribute of high processing accuracy, the design of the protruding ring is processed together with the rolling bearing processing. Therefore, compared with ordinary parts such as spacing sleeves, components, the tolerance probability will be greatly reduced; the rolling bearing 41 not only can be used in roller skates, but also can be used in other related fields. The following is an example of the rolling bearing 41 being used in roller skates.

The roller shoe assembled with the above-mentioned rolling bearing 41 includes a wheel frame 61 and a pulley 4 for supporting the main body of the roller skate. The wheel frame 61 is connected to the supporting part 71 of the shoe body and the vertical plate 81 extending downward from both ends of the supporting part 71 The vertical plate 81 is provided with through holes that match the nails 91.

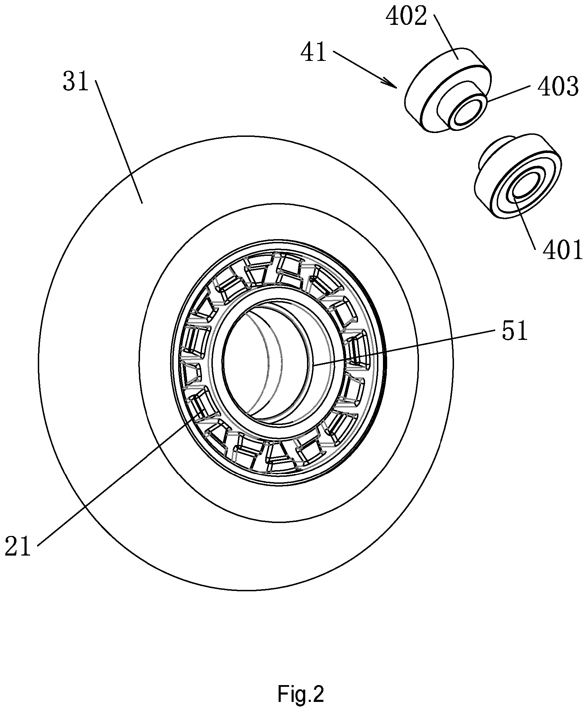

The pulley 4 is installed between the vertical plates 81 on both sides and the supporting part 71. A nail 91 with an internal thread passes through the center of the vertical plate 81 and the pulley 4, and is locked with a screw rod at the vertical plate 81 on the other side. This is normal practice. As shown in Figures 2-4, the pulley 4 is composed of a wheel core 21 and a PU outer ring 31. There is an assembly hole 51 in the middle of the wheel core 21, and an inner convex stop ring 502 is formed in the middle of the assembly hole 51. The stop ring 502 is located on both sides of the pulley 4. An annular outer ring fixing groove 501 is formed between the adjacent assembly hole openings, and the thickness of the stop ring 502 is the outer ring fixing distance L.

The rolling bearing 41 of the present invention extends a protruding ring 403 outward from the inner ring 401 on one side. During processing, the length S of the protruding ring 403 is set equal to 1/2 of the outer ring fixed spacing L. During assembly, the protruding rings 403 on both sides are opposite and abut each other and be installed in the assembly hole 51 . The protruding rings 403 of such a pair of rolling bearings 41 replace the movable spacing sleeves during traditional assembly, so that the tolerance of the spacing sleeves does not need to be considered during assembly. The rolling bearings 41 are precision parts and have lower tolerances than ordinary accessories. The present invention omits the spacing sleeve, does not need to consider the tolerances of other accessories, and directly converts the assembled system tolerance into the assembly tolerance of a pair of rolling bearings 41, greatly reducing the system tolerance value and solving the current inability to install the pulley 4 of the pulley shoe. Tightening problem.

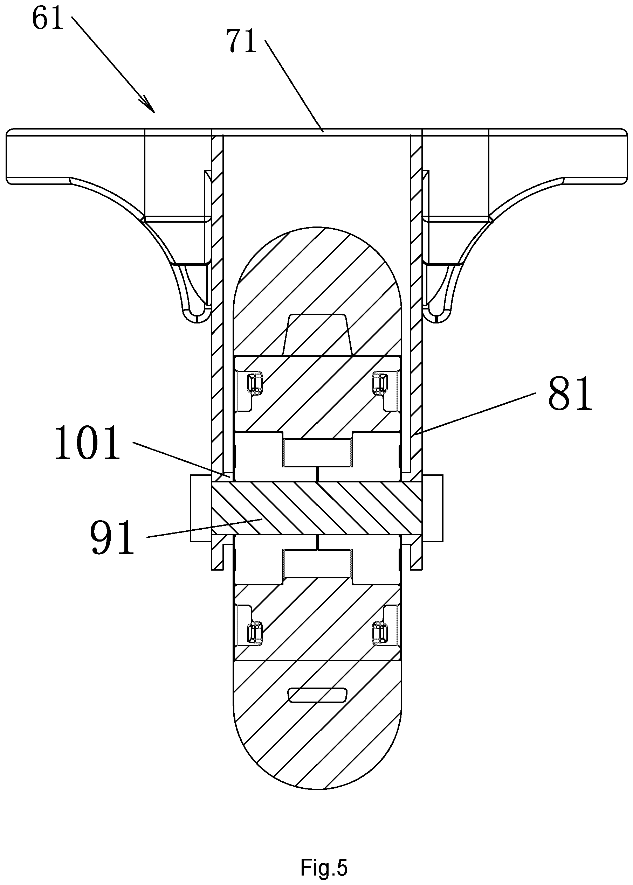

As shown in FIG. 5 , when the nail 91 is inserted to lock the pulley 4 and the vertical plate 81 , the pair of bearing inner protruding rings 403 are pressed against each other, and the bearing outer inner ring 401 is pressed against the protruding portion 101 of the vertical plate 81 . A better solution, in actual operation, is to ensure that the size of the fixed spacing L of the outer ring must be less than the tolerance point of the sum of the lengthened values of the two protruding rings 403, and the others can be ignored. This tolerance control is very important for the rolling bearing 41. For precision parts processing, it is easy to control; in this way, the sum of the lengths 2S of the two protruding rings 403 is slightly larger than the outer ring fixed distance L. When the nail 91 is tightened, the inner ring 401 and the protruding ring 403 of a pair of rolling bearings 41 become closer. It can be kept in a straight line, and the rolling bearing 41 can be kept in a normal position when working. The balls always maintain a normal relative relationship with the grooves, and will not lock the outer ring 402 of the rolling bearing 41 or affect the rotation of the outer ring 402 of the rolling bearing. This ensures the flexibility of the pulley 4 wheels to rotate without load. For example, the length of the protruding ring 403 is 5.1mm, and the fixed spacing L of the outer ring is 10mm. In this way, the sum of the lengths of the two protruding rings 403 is 0.2mm larger than the fixed spacing L of the outer ring, and each bearing only has an average tolerance of 0.1mm more. It is almost imperceptible after putting on the foot, and the adverse factors to the rotation of the pulley are almost negligible.

Furthermore, the peripheral surface of the rolling bearing outer ring 402 has an interference fit with the assembly hole 51. The rolling bearing outer ring 402 and the assembly hole 51 are kept relatively stationary through friction, and there is no relative sliding between the two. When the pulley 4 is forced to rotate, the kinetic energy loss obtained by the rolling bearing 41 is smaller, and the pulley 4 can rotate at a higher speed.

The inner ring 401 on the other side of the rolling bearing is kept at the same height as the outer ring 402, and the outer side of the assembled bearing 4 is kept consistent with the outer side of the traditional bearing assembly. It can be used with the common wheel frame 61 on the market, and there is no need to match a specific wheel frame 61.

A more optimal solution is a pair of rolling bearings 41 in the assembly hole 51. The length of the outer ring 402 protruding from the opening of the assembly hole 51 is 0.5-1.2mm, and the length of the protruding portion 101 protruding from the inner side of the vertical plate 81 is 0.5-1.2 mm. 2.2-2.8mm. In this case, a part of the outer ring 402 protrudes outward relative to the opening of the assembly hole 51. However, since the length of the protruding portion 101 is longer than this protrusion, at least 0.8mm longer, it is ensured that the outer ring 402 does not touch the inner side of the riser 81 to ensure a safe distance.

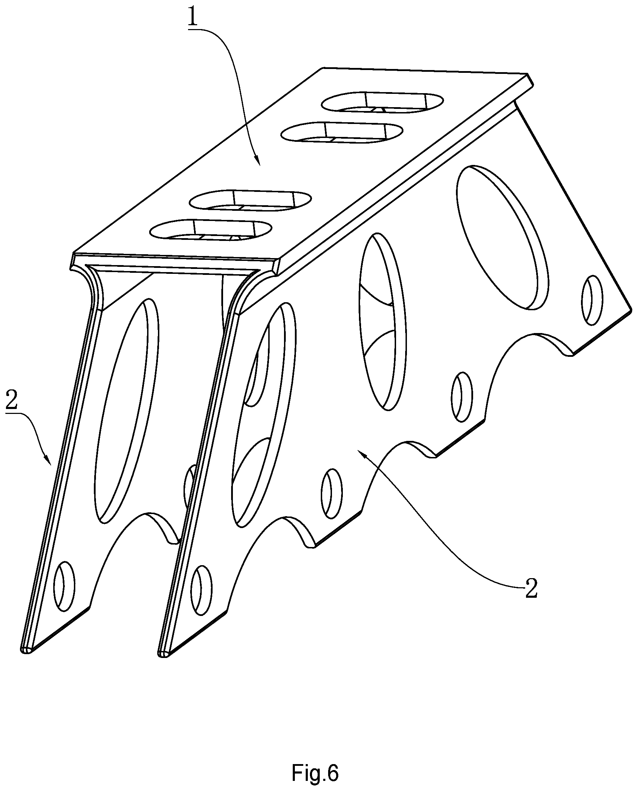

Furthermore, in roller skating racing, special attention is paid to the design of roller skate wheel frame. Its support strength, torsion resistance and its own weight are all important design indicators; most U-shaped wheel frame on the market, such as that shown in Figure 6, its height is usually about 10mm greater than the radius of the wheel. This makes it easy for athletes to deform at the connection between the supporting part 1 and the vertical plate 2 when accelerating on the side roller skates. This is due to poor torsion resistance. The resulting deformation will absorb part of the force of the human body pushing on the ground and the reaction force from the ground for acceleration, thereby reducing the propulsion ability during exercise and affecting the final performance.

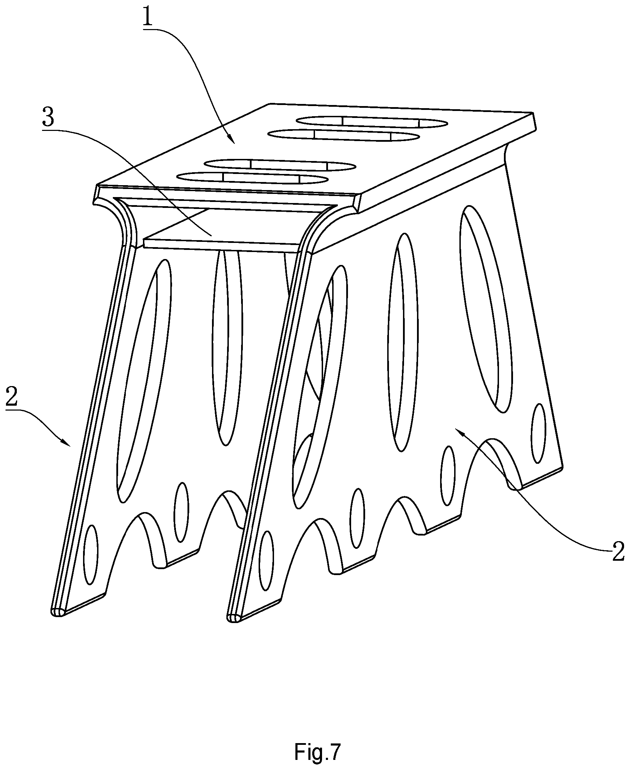

Many manufacturers will choose to raise the height of the supporting part 1 and add a horizontal reinforcing plate 3 between the two vertical boards 2, as shown in Figure 7. Generally, the supporting part 1 will be heightened by 10-12mm, and the reinforced plate 3 is located at the height of the original supporting part 1, but this does not solve the above problem. The location prone to deformation becomes the connection between the reinforcing plate 3 and the vertical plate 2, and other problems arise, such as heavier wheel frame and waste of material. The waste of materials leads to an increase in costs, and the heavier weight of the wheel frame will reduce the flexibility of the athletes' feet and make it more laborious every time they lift their feet. The entire game consumes more physical strength, which also affects the final performance.

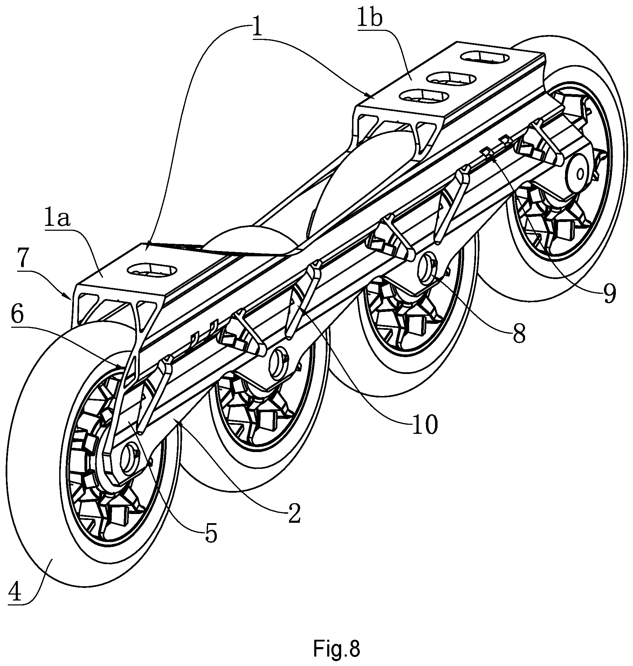

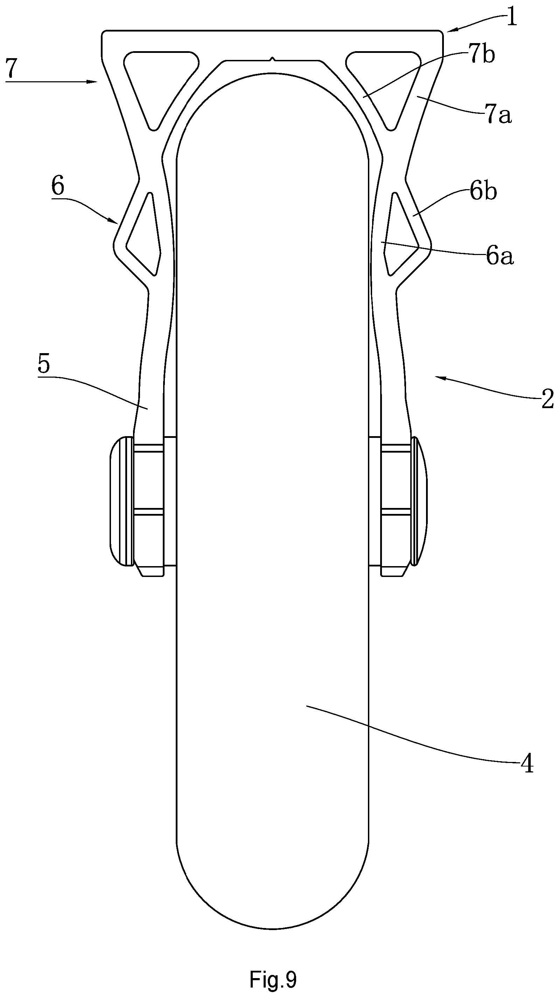

Therefore, it is a problem to be solved by the present invention to improve the support strength and torsion resistance of the roller skate wheel frame without increasing or even reducing the weight of the wheel frame. As shown in Figures 8 and 9, this embodiment provides a roller skate wheel frame with strong torsion resistance, including a supporting part 1 and a vertical plate 2. The supporting part 1 and the vertical plate 2 are integrally formed. The supporting part 1 is configured to install and support the shoe body of the roller skate, and the vertical plate 2 is configured to install the pulley 4 of the roller skate; the supporting part 1 is set horizontally, and the upper end of the vertical plate 2 is fixedly connected to the supporting part 1. There are two vertical plates 2. The two vertical plates 2 are respectively arranged vertically on the left and right sides of the supporting part 1. The vertical plate 2 includes a plate-shaped mounting part 5, a reinforcing tube 6 arranged along the length direction of the vertical plate 2, and an anti-torsion part 7 connected to the supporting part 1. The mounting part 5, the reinforcing tube 6 and the anti-torsion part 7 are distributed in sequence from bottom to top.

The mounting part 5 is configured as a pin to fix the pulley 4, the reinforcing tube 6 is configured to prevent the vertical plate 2 from deforming, the anti-torsion part 7 is configured to prevent the vertical plate 2 and the supporting part 1 from deforming, the mounting part 5, the reinforcing pipe 6 and the anti-torsion part 7 are arranged in sequence from bottom to top and are integrally formed.

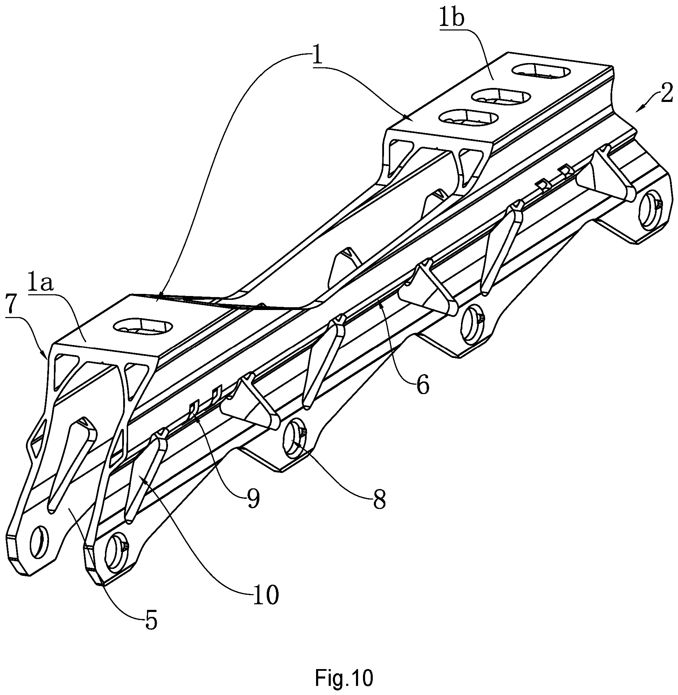

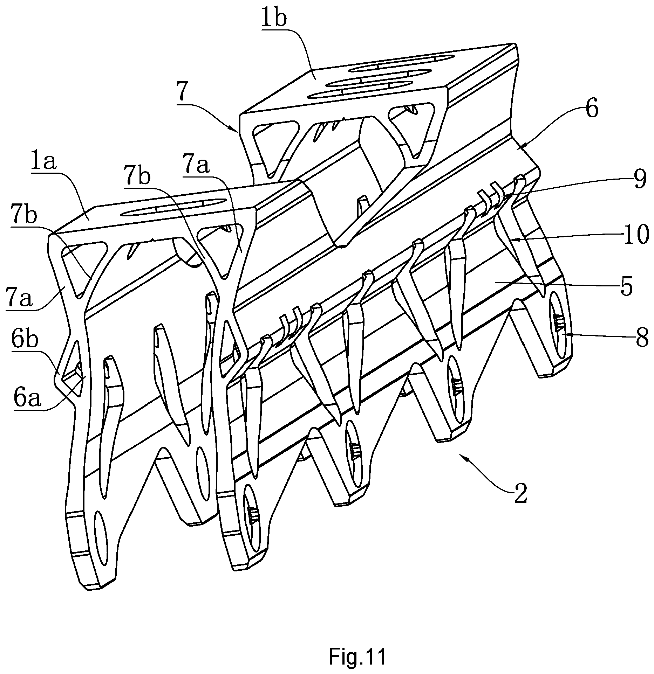

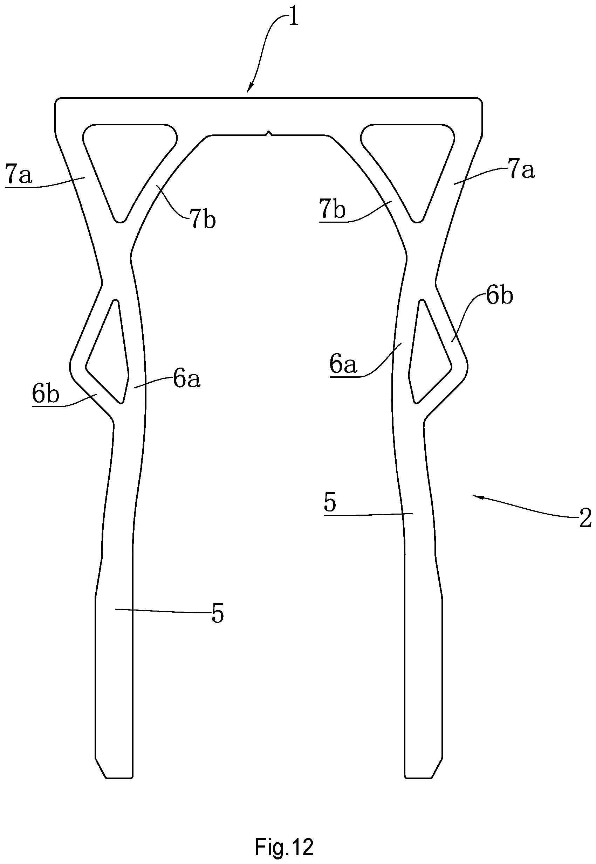

As shown in Figures 10-12, the anti-torsion part 7 includes two support plates branched upward. Both support plates are fixedly connected to the supporting part 1. The two supporting plates are connected to the ends of the supporting part 1. The outer support plate 7a and the inner support plate 7b connected to the lower surface of the support part 1. Specifically, the support part 1 is plate-shaped, with mounting holes 8 for fixing the roller skate body provided on it. The left and right ends of the supporting part 1 are fixedly connected to the outer supporting plates 7a on the two vertical plates 2, while the inner supporting plates 7b on the two vertical plates 2 are between the two vertical plates 2 and upwardly connected with the supporting part 1. The surface is fixedly connected; the outer support plate 7a tilts outward, the inner support plate 7b tilts inward, and the anti-torsion part 7 is V-shaped as a whole. After being connected to the supporting part 1, the outer supporting plate 7a, the inner supporting plate 7b and the supporting part 1 together form a triangular tubular body. The outer support plate 7a is tilted outward, which also makes the distance between the two vertical plates 2 (i.e., the installation gap of the roller skate pulley 4) smaller than the width of the supporting part 1. The purpose of the wider width of the supporting portion 1 is to allow the roller skate body to be more stably connected to the wheel frame. In addition, due to the existence of the tubular body, the upper part of the vertical plate 2 is strong, and the force arm L becomes from the axis hole where the vertical plate 2 installs the pulley 4 pin to the lower edge of the reinforcing tube 6, instead of the axis where the vertical plate 2 installs the pulley 4. From the hole to the connection between the vertical plate 2 and the supporting part 1, compared with the previous wheel frame, the force arm L is greatly shortened, and the force required to twist the vertical plate 2 to deform is greatly increased, and the deformation of the vertical plate 2 becomes difficulties to achieve the purpose of the present invention.

The cross-section of the reinforcing tube 6 is roughly triangular, that is, the reinforcing tube 6 is also a triangular tubular body with a stable structure; the reinforcing tube 6 includes an inner plate 6a and an outer plate 6b with an included angle, and the outer plate 6b is located outside the inner plate 6a and on the inner plate. 6a is fixedly connected, and the inner panel 6a is arranged roughly vertically; in addition, the inner panel 6a has an included angle of about 155° and the inner panel 6a is in an outwardly bent posture.

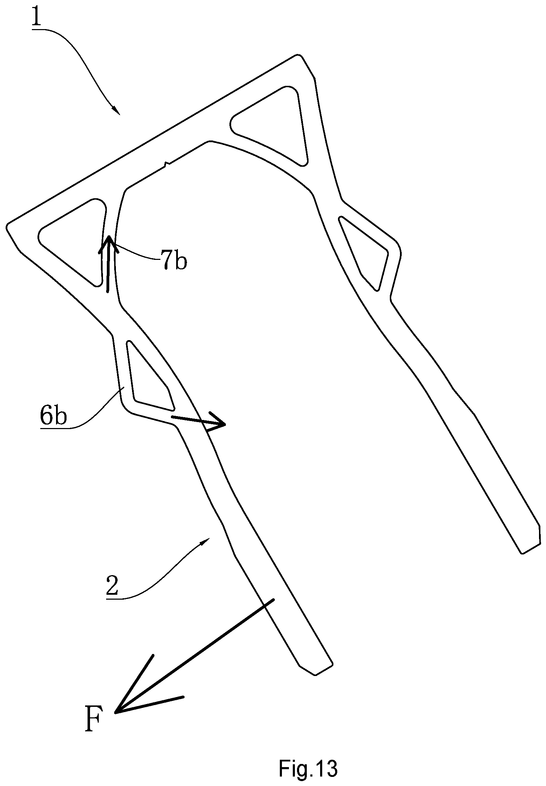

When the roller skates using this wheel frame are accelerated by the athlete pushing sideways, a more complete propulsion force can be obtained, because the overall torsion resistance of the wheel frame is enhanced, and the propulsion force lost due to deformation is greatly reduced; specifically, When an athlete pedals sideways, the wheel frame will be subject to the pedaling force actively given by the movement and the reaction force given by the ground. Since the athlete's roller skates tilt when pedaling, the above two forces will combine to form a torsion force F acting on the wheel frame, if the torsion resistance of the wheel frame is poor, a part of the final propulsion force will be lost. In this embodiment, the anti-torsion part 7 is provided between the supporting part 1 and the vertical plate 2 to enhance the torsion resistance between the two. There is a reinforcing tube 6 on the vertical plate 2 to enhance its torsion resistance. When the wheel frame is subjected to the torsion force F1, as shown in Figure 13, the lower end of the vertical plate 2 located on the front side has a tendency to twist outward, and the deformation of the vertical plate 2 itself may occur, and relative deformation may occur between the vertical plate 2 and the supporting part 1. At this time, the inner supporting plate 7b located between the vertical plate 2 and the supporting part 1 will tighten the vertical plate with an outward twisting tendency. The plate 2 prevents the vertical plate 2 from deforming relative to the supporting portion 1, and the outer plate 6b in the reinforced tube 6 stabilizes the overall posture of the vertical plate 2 and resists the tendency of the vertical plate 2 to twist itself, thereby preventing the vertical plate 2 and the vertical plate 2 from deforming. Further deformation occurs between it and the supporting part 1 and the power for acceleration is lost. Similarly, when the wheel frame is subjected to the torsion force F2, as shown in Figure 8, the lower end of the vertical plate 2 on the rear side has a tendency to twist inward, and the inner support plate 7b located between the vertical plate 2 and the supporting part 1 will resists the vertical plate 2 that has an inward twisting tendency to prevent the vertical plate 2 from deforming relative to the supporting portion 1, and the outward bending posture of the inner plate 6a in the reinforcing tube 6 can resist the inward twisting tendency of the vertical plate 2. This prevents the vertical plate 2 from further deforming and losing power for acceleration.

On the other hand, the reinforcing tube 6 and the triangular tubular body formed by the anti-torsion part 7 and the supporting part 1 can ensure the structural strength of the wheel frame and improve the overall support capability.

In addition, in order to reduce the weight of the wheel frame, a corresponding lightweight design has been carried out. There are several weight-reducing openings 9 on the outer plate 6b. The spacing between the weight-reducing openings 9 ensures that the structural strength of the reinforcing tube 6 will not be reduced. The wall thickness of the anti-torsion part 7 and the reinforcing tube 6 is half of the thickness of the mounting part 5, that is, the anti-torsion part 7 and the reinforcing tube 6 are formed by relying on the material of the wheel frame itself, or in other words, the outer support plate 7a and the inner support plate 7b of the anti-torsion part 7 and the inner plate 6a and outer plate 6b of the reinforcing tube 6 are all formed by 5 bifurcations of the mounting part, and the thickness of the plate-shaped body is replaced by a tubular body, so there is no need to form a separate reinforcement structure, which helps to reduce the weight of the wheel frame.

In the length direction of the vertical board 2, the front and rear ends of the vertical board 2 exceed the supporting portion 1, and the front and rear ends of the vertical board 2 are cut from bottom to top toward the center, so that one corner of the vertical board 2 protrudes from the supporting portion 1 in the front and rear directions. Since the vertical plate 2 needs to be installed with the pulley 4, the diameter and number of the pulley 4 also affect the length of the vertical plate 2, and the supporting part 1 only needs to be connected to the shoe body and does not need to be so long, so this will not only reduce the amount of material used in the supporting part 1 and the amount of material used in the vertical plate 2 is also reduced, which reduces the cost and reduces the weight of the wheel frame, which is helpful for athletes to start and accelerate. Similarly, there are several weight-reducing holes 10 on the vertical plate 2 to make the wheel frame lighter.

The supporting part 1 includes a front supporting part 1a and a rear supporting part 1b. The front supporting part 1a and the rear supporting part 1b are spaced from front to back. The gap formed between the front supporting part 1a and the rear supporting part 1b also makes the weight of the wheel frame further reduced.

The above are only specific embodiments of the present invention, but the protection scope of the present invention is not limited thereto. Those skilled in the field should understand that the present invention includes, but is not limited to, the contents described in the accompanying drawings and the above specific embodiments. Any modifications that do not depart from the functional and structural principles of the invention are intended to be included in the scope of the claims.

### Beneficial results

The beneficial results description is added here.

### Drawings Description

The drawings description is added here.

## Claims

1. A rolling bearing, **characterized in that** it comprises: an inner ring, an outer ring and a plurality of balls distributed between the inner and outer rings, wherein the rolling bearing has a protruding ring extending outward from the inner ring only on one side, the protruding ring and the inner ring are integrated into one piece, the end of the protruding ring forms an abutting end with abutting effect.

2. An application of a rolling bearing to a roller skate, the roller skate comprises the rolling bearing as claimed in claim 1 and:
a wheel frame configured as a main body support of the roller skate, the wheel frame comprising a supporting part for connecting with a skate shoe body and two vertical plates extending downward from both ends of the supporting part, respectively, a space for accommodating pulleys being enclosed between the two vertical plates and the supporting part, the vertical plates being provided with through holes for the nails to pass through;
each of the pulleys comprising a wheel core, and an assembly hole for installing a rolling bearing being provided in a center of the wheel core;
the pulley being rotationally connected to the vertical plate through nails; a stop ring protruding toward a center of the assembly hole being provided in a middle of the assembly hole, and the rolling bearings are installed in pairs in the assembly hole, and the outer rings of the two rolling bearings are separated by stop rings, the protruding rings of the two rolling bearings in the assembly hole are all inward and the abutting ends are in contact with each other;
a protruding portion for contacting the inner ring of the rolling bearing being provided at the through hole on the inner side of the vertical plates, the protruding portion protruding from the inner side of the vertical plate, when the pulley being between the two vertical plates, the protruding portion and the inner ring of the rolling bearing abutting against each other.

3. The application of a rolling bearing according to claim 2, **characterized in that**: the outer ring peripheral surface of the rolling bearing has an interference fit with the assembly hole.

4. The application of a rolling bearing according to claim 2, **characterized in that**: the thickness of the stop ring forms a fixed spacing of the outer ring, and the length of the single-sided extension of the inner ring of the rolling bearing, that is, the length of the protruding ring, is 1/2 of the fixed spacing of the outer ring.

5. The application of a rolling bearing according to claim 2, **characterized in that**: the thickness of the stop ring forms a fixed spacing of the outer ring, the sum of the lengths of the two protruding rings is greater than the fixed spacing of the outer ring, and the sum of the lengths of the two protruding rings is 0.1-0.3 mm greater than the fixed spacing of the outer ring.

6. The application of a rolling bearing according to claim 2, **characterized in that**: among the two rolling bearings, the length of the outer ring protruding from the opening of the assembly hole is 0.5-1.2mm, and the length of the protruding portion protruding from the inner side of the vertical plate is 2.2-2.8mm.

7. The application of a rolling bearing according to claim 2, **characterized in that**: the vertical plate includes a reinforcing tube arranged along the length direction of the vertical plate and an anti-torsion part connected to the supporting part; the reinforcing tube is configured to prevent the vertical plate from deforming; and the anti-torsion part is configured to prevent the vertical plate from connecting with the supporting part. deformation occurs between them.

8. The application of a rolling bearing according to claim 7, **characterized in that**: the anti-torsion part comprises two support plates branched upward, both of which are fixedly connected to the support part; the two support plates are respectively an outer support plate connected to the end of the support part and an inner support plate connected to the bottom of the support part; the outer support plate is inclined outward; the inner support plate is inclined inward; the outer support plate, the inner support plate and the supporting part jointly form a triangular tubular body.

9. The application of a rolling bearing according to claim 7, **characterized in that** the cross section of the reinforcing tube is generally triangular.

10. The application of a rolling bearing according to claim 9, **characterized in that**: the reinforcing tube includes an inner plate and an outer plate with an included angle, the outer plate is located outside of the inner plate and is fixedly connected to the inner plate; the outer plate is provided with a weight-reducing opening.

11. The application of a rolling bearing according to claim 10, **characterized in that**: the inner plate has an included angle and the inner plate is bent outward.

12. The application of a rolling bearing according to claim 11, **characterized in that** the included angle range of the inner plate is between 150° and 160°.

13. The application of a rolling bearing according to claim 7, **characterized in that**: the vertical plate further includes a plate-shaped mounting part, the mounting part is configured as a pin for fixing the roller, the protruding part is provided on the mounting part; wall thickness of the anti-torsion part and the reinforcement tube is half the thickness of the mounting section.

14. The application of a rolling bearing according to claim 7, **characterized in that**: in the length direction of the vertical plate, the front and rear ends of the vertical plate exceed the supporting portion, and the front and rear ends of the vertical plate are cut from bottom to top toward the center.

15. The application of a rolling bearing according to claim 7, **characterized in that** the supporting part and the vertical plate are integrally formed.
